Europäisches Patentamt

European Patent Office

Office européen des brevets

(19)

(11) **EP 0 955 277 A1**

(12) **EUROPEAN PATENT APPLICATION**

(43) Date of publication:
    **10.11.1999 Bulletin 1999/45**

(51) Int. Cl.$^6$: **C04B 24/38**

(21) Application number: **98201379.9**

(22) Date of filing: **28.04.1998**

(84) Designated Contracting States:
    **AT BE CH CY DE DK ES FI FR GB GR IE IT LI LU
    MC NL PT SE**
    Designated Extension States:
    **AL LT LV MK RO SI**

(71) Applicant:
    **Coöperatieve Verkoop- en
    Productievereniging van Aardappelmeel en
    Derivaten 'AVEBE' B.A.
    NL-9641 JA  Veendam (NL)**

(72) Inventor:
    **The designation of the inventor has not yet been
    filed**

(74) Representative:
    **Smulders, Theodorus A.H.J., Ir. et al
    Vereenigde Octrooibureaux
    Nieuwe Parklaan 97
    2587 BN 's-Gravenhage (NL)**

(54) **Self-consolidating concrete comprising a polysaccharide additive**

(57)    The invention relates to concrete and additives thereto. The invention provides a method to mix or pour or place concrete using a concrete comprising a poly-surfactant-like polysaccharide additive, preferably wherein said additive is derived of starch or is at least partly soluble in 95 % ethanol. The invention also provides a polysurfactant-like additive and a method to make such an additive.

EP 0 955 277 A1

**Description**

The invention relates to concrete and additives thereto.

Concrete, in its most basic form, is a moist paste that is made by mixing water, cement and solids such as sand, (fly) ash, slag, gravel, crushed stone or other particles of various size. The wet paste is also called concrete cement, concrete mortar or concrete slurry. It is the chemical interaction of water and cement (ground, mixed and heated limestone, chalk, clay or shale) that binds all these components together and finally turns the concrete into the hard and strong substance (also called concrete) that is so widely used in building.

When cement is mixed with water, complex chemical changes and crystallisations occur, and a hard solid soon results. When sand, gravel, crushed rock or other solids are included in the mixture the product is concrete. When only fine solids are included in the mixture, the concrete is also called a mortar or grout, which find their specific uses in for example brick laying, levelling, plastering or for filling cracks or spaces under pressure. However, most uses of concrete include larger solids; when solids are intermixed with for example a sand-cement paste they are held together in a dense structure whereby the resistance of the hardened paste to compressive or tensile stresses is largely dependent on the components that were used in the paste to begin with.

Concrete is more widely used than all other materials of construction combined, including iron, lumber, steel, structural clay, glass and plastics. Products made from concrete include architectural stone, concrete blocks, paving blocks, gas concrete (ytong) blocks, aerated lightweight structures, concrete pipe, culverts, lintels, elements for floor, wall and roof construction, chutes, piles, pillars and many other prefabricated elements or units of concrete. However, most concrete is used at the building site, where it is used to pour foundations, slabs, floors, roofs, pillars, arches, road surfaces, and other new structures, and to restore or strengthen existing structures.

Pouring concrete, be it during prefabrication of concrete elements or at the building site, generally requires a predetermined space such as a form or mould or formwork or casing. Such a form or space can have many shapes, and by necessity, every nook and corner of such a form, be it a simple open patch encased by planks or a complicated mould for a concrete arch, has to be filled by the concrete. Complete and satisfactorily filling is often complicated by the presence of reinforcements in the form that functions to give extra strength to the final product or structure. Well known reinforcements are glass-fibre or steel found in reinforced, armoured or pre-stressed concrete. Often, at the building site, complex matrixes of steel are first fixed in place before the concrete is poured in place. Needless to say that the presence of such reinforcements further complicates an equal and speedy distribution of the poured concrete, especially knowing that the hardening process has already commenced.

Two characteristics, consistency and workability, are important in judging the quality of concrete with respect to the pouring phase. Consistency can be defined as the relative mobility or ability of mixed concrete to flow. Workability is that property that determines the effort required to manipulate a mixed quantity of concrete with minimum loss of homogeneity, or that determines the ease and homogeneity with which it can be mixed, placed, compacted and finished.

Pouring of concrete is therefore nearly always accompanied by methods and efforts that strive on the one hand to compact the concrete sufficiently to achieve the required strength and on the other hand to distribute the concrete as fast and as evenly as possible through the form or casing. In general this is achieved during and after pouring by a laborious and time and energy consuming process of spreading, compacting and levelling, often with the help of vibrating machines that shake and move the paste until the form of casing has been evenly filled.

Simply diluting the paste more with water is counter productive. First of all, the water/cement ratio (w/c) of concrete is set within certain limits. Cement requires about 1/4 of its weight of water to become completely hydrated. If water is in excess which does not enter into chemical combination with the cement, it forms water voids, or may subsequently dry out leaving air voids.

When concrete is too dry, the necessary chemical reactions that cause the concrete to harden cannot or only slowly proceed, resulting in uneven and faulty hardening. Furthermore, a dry paste is hardly workable, when one wants to pour concrete in forms, moulds or encased structures, it often even does not compact sufficiently. On the other hand, when a paste is made highly flowable or self-leveling by adding extra water it is too wet, the solids and especially the larger particles in the paste will segregate from the paste and get unevenly distributed through the finally hard substance, compromising the strength and durability of the structure or unit. Segregation is even aggravated when a form or casing contains reinforcements, the solids and aggregates thereof will become entrapped behind the reinforcing (steel) bars or matrix while the thin cementious paste spreads out further. The quality of the work gets even worse because in a too thin paste water tends to segregate from the paste as well, a phenomenon known as bleeding. This water ends up on the surface during the hardening process, thereby scarring the surface in such a way that often a second (finishing) surface (i.e. using a thicker paste) needs to be applied.

Furthermore, vibrators, or shaking of forms during the production of prefabricated elements, contribute to this process of segregation, especially when the paste is too thin.

The danger of segregation of constituents depends mainly on the wetness of the mix and the size distribution of the solids. It is in general necessary to decrease the solid particle size (increase the fines content) and increase the cohesiveness to prevent segregation when the paste is wet, when handling conditions promote segregation, as when it is jolted during transport, dropped into a mould from a height or discharged down chutes, when the mould or casing contains much small details and sharp corners, and when it is pumped.

Several additives exist to influence the consistency and workability of concrete. Well known is the addition of modified or natural polysaccharides such as starches from cereals (corn, rice) or tubers and roots (potato, tapioca) or cellulose from various sources as thickening agents. These viscous polysaccharide additives are mainly used to thicken a mortar or concrete as a binder of water, providing sag resistance and stiffness to a mortar, often used for plastering or pointing where improved thickness and sag resistance is needed. Additionally, such additives, due to their water binding properties may help reduce bleeding of a freshly poured concrete surface. Yet other commercially available polysaccharides are often mentioned but only little used in concrete, due to the prohibitive pricing of these products. To give an idea, when unmodified starches such as tapioca, corn, or potato starch vary in price from f0.50-075/kg and cellulose prices at f1.50/kg, other (unmodified) products are much more expensive. Gum from guar beans and locust beans price at f3/kg, alginates price at f7-17/kg and bacterial gums such as Wellan gum or Xanthan gum price at f20/kg. Wellan gum has lately specifically been mentioned as a viscosity agent improving workability properties of a so-called self-compacting concrete (NV Concrete), however, this additive bears, in addition to its high price, the additional disadvantage that it only works under strictly defined conditions of particle size distribution, whereby it is necessary to greatly increase the percentage of fine solids in a concrete mix, thereby limiting the volume of large solids and coarse aggregates. In addition, Wellan gum is in itself very viscous, even a 1% solution can hardly be mixed with concrete because it is so thick. It therefore preferably needs to be added as dry matter which hampers an even distribution through the concrete mix.

Yet other well known additives are superplasticizers, such as melamine, naphtalene, acrylic or vinilic polymers and lignosulphonate. Contrary to the polysaccharides, these products do not increase the viscosity or consistency of the concrete but alter its flow-characteristics, thereby making it more flowable and better suited for pouring in complicated casings, possibly containing reinforcement material. However, a superplasticizer does not necessarily maintain a more flowable and workable concrete as time passes, adding superplasticizer also reduces the cohesiveness between the cement paste and solids or aggregates, resulting in segregation of the aggregate and shorter workability time periods. Furthermore, a superplasticizer will in general produce an increase in bleeding.

As can be seen from the above, the two types of additives herein discussed have rather contradicting characteristics. The polysaccharide additives in general increase the viscosity and water binding properties of the mix, thereby countering segregation and bleeding but hampering the flow of the mix, whereas a superplasticizer in general improves the flow of a concrete but has negative effects on bleeding and segregation.

In practice, the best concrete to place and finish is that which exhibits highest consistency and workability. Therefore, in general one uses a fairly thick paste, in which the larger particles get not so easily segregated and from which the water does not or only little bleed, and then applies a lot of labour and noisy machines to generate a flat surface or an evenly and homogeneously filled form. Another much applied method is to first pour a layer using concrete that has been made more flowable by using additional water, where after the surface is finished in a second round by applying a so-called quartz top (fine gravel with cement) layer and scattering and grating the second layer until a float and smoothly polished surface is obtained, thereby necessitating a second round of labour.

In the light of the expensive labour and machine requirements that are at present commonplace in methods of producing concrete elements and structures, there is a need for a method that reduces the workload and the need for vibrating machines during and after pouring of concrete. There is thus a need to provide a concrete with better workability. There is for instance a need for a concrete with improved compacting characteristics, whereby forms, moulds or castings can be filled without having to rely so heavily on mechanical vibration. Often, the reinforcement structure and/or a casing stands in the way of the vibrating machine, thereby limiting the possibility to produce reinforced structures. Furthermore, there is a need to provide a concrete with self-levelling properties. Such a concrete must be able to be placed with relative ease but must not or only little segregate during placing and must not bleed.

The invention provides a method for pouring or placing concrete using a concrete comprising a polysurfactant-like additive. Said additive, preferably having been derived from a biopolymer such as a polysaccharide, provides concrete with desirable properties making it very easy to pour or place. Said additive for example combines desirable properties of a superplasticiser (increased flow) with those of a normal viscosity agent (resistance to segregation and resistance to bleeding.

Concrete as provided by the invention shows only little or no segregation and/or bleeding, and improved flow. The invention thus provides a method of placing or pouring concrete that greatly facilitates both pre-fabricating concrete elements or units, or concrete structures that are poured in place.

It is now possible to pour a concrete as provided by the invention that has self-levelling, self-compacting or self-consolidating properties to the extent that the workload or vibration needed to level, compact or consolidate the concrete is much less than it would be for ordinary concrete.

Said polysaccharide additive as provided by the invention is derived by etherification from biopolymers of various origin and of varying molecular length, such as from cellulose, inuline, guar, dextran, pullulan, tamarind or locust bean. In a preferred embodiment, said additive is derived from plant starch, such as cereal starches (corn, rice, wheat, etc) or starches from tubers and roots (cassave, sweetroot, yam potato, etc), be it of natural varieties of such plants or of genetically modified plants.

In the experimental part, the invention is exemplified with potato starch, however, other polysaccharide additives with polysurfactant-like character are also provided by the invention.

Said additive derives its polysurfactant-like character mainly from etherification to degrees of substitution (DS) that are higher than those generally provided for in the art. Especially solubility in 90-100% ethanol (i.e. an ethanol/water ratio of 19:1) of an additive as provided by the invention is characteristic for its polysurfactant-like character, which, when added to a concrete mix or paste, provides said concrete with the desired characteristics.

Etherification (hydroxyalkylation or alkylation) of a polysaccharide can be performed under (semi) dry conditions, in suspension (water or organic solvent), or in aqueous solution (dispersion). Depending on the source of polysaccharide and the type of reagent the reaction system is chosen. General methods for the etherification (hydroxyalkylation or alkylation) of cellulose is described in for example: British Polymer Journal 23 (1990) 315-326. Guar and locust bean gum ethers are produced either in organic suspension or via a (semi) dry reaction. A reaction in aqueous solution is preferred when starch is used as starting material. An autoclave is then preferably used as reaction equipment. A resulting reaction mixture can be used as such or be dried.

The invention provides a method wherein said additive is at least partly soluble in 95 % ethanol. The degree of substitution to produce polysurfactant-like polysaccharides which can dissolve in 95 weight % ethanol depends on the nature of the polysaccharide and the hydrophobicity of the reagent. When a more hydrophobic substituent is used a lower DS can be applied in comparison to a reagent which is less hydrophobic.

The invention thus provides a wide range of polysurfactant-like additives, for example for use in concrete. Varying its hydrofobic nature (by varying side chains or the nature of the polysaccharide chains) allows variation in hydrofobic nature. Hydroxyalkylation or alkylation of polysaccharides is obtained with reagents containing a halogen, halohydrin, epoxide or glycidyl group as reactive site. The alkyl chain of the hydroxyalkylating or alkylating agent can vary from 1-20 carbon atoms, preferably from 1-12 carbon atoms, more preferably from 1-4 carbon atoms, for example methyl chloride, ethyl chloride, ethylene oxide, propylene oxide, butylene oxide, allyl glycidyl ether, propyl glycidyl ether, dimethyl sulphate or combinations of those reagents can be used. Preferably propylene oxide is used to produce hydroxyalkylated polysachharides.

In a preferred embodiment of the invention, a method using an additive comprising a hydroxypropylated starch which is at least partly soluble in 95 % ethanol is provided. In order to prepare such a hydroxypropylated starch which partially dissolves in 95 weight % ethanol a maximum degree of substitution (DSmax) of at least 1.5 is required. This means that in this case 1.0 mole of glucose units is treated with 1.5 mole of propylene oxide. As a result the degree of substitution (DS), which is the ratio between the amount of etherified alcohol groups of the glucose unit (in mole) and the glucose unit (in mole) is less then 1.5, because the yield of the reaction is less than 100%. Besides, the reaction of starch with propylene oxide leads to a substituent (2-hydroxypropyl) which itself also possesses a hydroxyl group. On deprotonation the hydroxyl group of the 2-hydroxypropyl substituent can react with propylene oxide as well. This last reaction does not give an increase in the DS. However, the molar substitution (MS) which is the ratio between the propylene oxide which has reacted with the starch (in mole) and the amount of glucose units (in mole), increases.

In a much preferred embodiment of the invention a method is provided comprising using a polysurfactant-like hydroxypropylated starch additive wherein said DSmax is at least 1.75, preferably at least 2. However, as explained above, increasing DSmax in general increases hydrofobicity or polysurfactant-like character, but said preferred increase can also be obtained using more hydrofobic side chains or by varying the nature of the polysaccharide chains.

The invention provides a method for mixing concrete, for example for obtaining a self-compacting and/or self-levelling concrete, comprising adding at least one of above identified polysurfactant-like polysaccharide additives. In a preferred embodiment the invention provides a method for preparing a concrete comprising mixing cement, water and solids such as sand, fly ash, powdered limestone and coarse aggregates such as gravel or crushed rock, an additive such as a viscosity agent or a (super)plasticiser and at least one additive characterised in that said additive comprises a polysurfactant-like additive.

Said method can be applied before, during, or after a concrete mix has been transported to a place of use. Mixing said polysurfactant-like additive can be done with additive provided in a dried form, but can preferably be achieved by adding said additive in solution, preferably in a 10-30% solution in water. The amount of additive used is relatively small and amounts to less than 1 kg polysurfactant-like additive (expressed as dry matter) used per several hundreds of kg cement used in a mix. In a preferred embodiment of the invention, said additive is used in quantities less than 100 gram, or even less than 50 gram per 100 kg cement used in a mix. Alternatively, polysurfactant-like additive can be added per final volume of concrete mix, in the experimental part of the description, examples are given using 0.260 and 0.180 $kg/m^3$ (expressed as dry matter).

Said polysurfactant-like additive can additionally be mixed with other additives, such as (super)plasticiser or viscosity agent, however, these can also be left out or added separately, as discussed above, when appropriate.

A concrete mix as provided by the invention can be used in pouring concrete in a predetermined space or casing or four pouring undefined surface slabs. Examples are i.e. for new construction or repair of building structures such as roads, bridges, housing, foundations, slabs, floors, roofs, tunnels, sewers, pillars, arches, road surfaces, and other new structures, and to restore or strengthen existing structures. Also a concrete mix as provided by the invention can be used in pouring or producing pre-fabricated elements or units of concrete including architectural stone, concrete blocks, paving blocks, gas aerated blocks, aerated lightweight structures, concrete pipe, culverts, lintels, elements for floor, wall and roof construction, chutes, piles, pillars and many other prefabricated elements or units of concrete.

The invention also provides concrete for use in a method for placing concrete as provided by the invention, be it in fresh or hardened form. Such concrete is characterised by its self-levelling, self-compacting or self-consolidating characteristics and can be found in prefabricated concrete elements obtained by using a method as provided by the invention or in concrete structures obtained by using a method as provided by the invention. Segregation of self-levelling concrete is prevented by preventing separation into mortar and coarse aggregates caused by settlement of coarse aggregates. Compressive strength, water permeability or shrinkage of a concrete provided by the invention is not affected by treatment.

The invention also provides a polysurfactant-like polysaccharide additive for use in a method as provided by the invention. Such an additive is for example characterised by its (at least partly ) hydrofobic nature, as demonstrated for example by its solubility in 95% ethanol. In a preferred embodiment of the invention said additive comprises a hydroxypropylated starch having a DSmax of at least 1.5, preferably 1.75, more preferably at least 2.

Furthermore, the invention provides a method to produce a polysurfactant-like additive comprising etherification of a polysaccharide up to a degree of substitution allowing dissolving said additive in 95 weight % ethanol. In a preferred embodiment of the invention a method is provided wherein said etherification comprises hydroxypropylating of a polysaccharide, such as a starch, preferably potato starch, wherein said degree of substitution (DSmax) is at least 1.5, preferably at least 1.75, more preferably at least 2.

The invention is further explained in the experimental part of this description, without limiting the invention thereto, and with reference to the attached drawings.

**Figures**

Figure 1. Is a graph showing resistance to segregation of concrete of a first example of the invention.

Figure 2. Is a graph showing resistance to segregation of concrete of a second example of the invention.

Figure 3. Is a graph showing resistance to segregation of concrete of a third example of the invention.

Figure 4. Is a graph showing resistance to segregation of concrete of a fourth example of the invention.

Figure 5. Is a graph showing shrinkage of concrete of a first example of the invention.

Figure 6. Is a graph showing shrinkage of concrete of a second example of the invention.

Figure 7. Is a graph showing shrinkage of concrete of a third example of the invention.

Figure 8. Is a graph showing shrinkage of concrete of a fourth example of the invention.

Figure 9.
Particle size distribution of sand used in various examples.

Figure 10.
Particle size distribution of gravel used in various examples.

Figure 11.
Dimensions of truncated cone used for determining flow.

Figure 12

EP 0 955 277 A1

Dimensions of column used for determining segregation.

## Experimental part, application of polysurfactant additive in concrete

### Materials

#### Cement

Normal portland cement, type CEM I 52$^5$ PM according to the European standard was used. Its density was 3.1 and its Blaine specific surface area was 360 m$^2$/kg. Its Bogue potential composition was:

C3S =    61.6 %
C2S =    21.5 %
C3A =    7.6%
C4AF =   8.4 %

#### Additional fine materials

Two type of fine materials were used:

- Fly ash of specific gravity 2.40 and Blaine specific surface area 260 m$^2$/kg
- Powdered limestone of specific gravity 2. 7 and Blaine specific surface area 385 m$^2$/kg.

#### Chemical admixtures

The type of superplasticizer used with these experiments is a melamine sulphonate but this can be replaced by any other type.

#### Aggregates

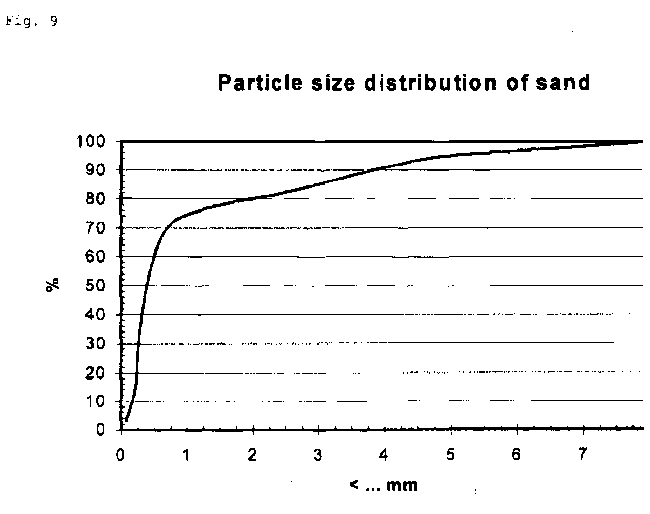

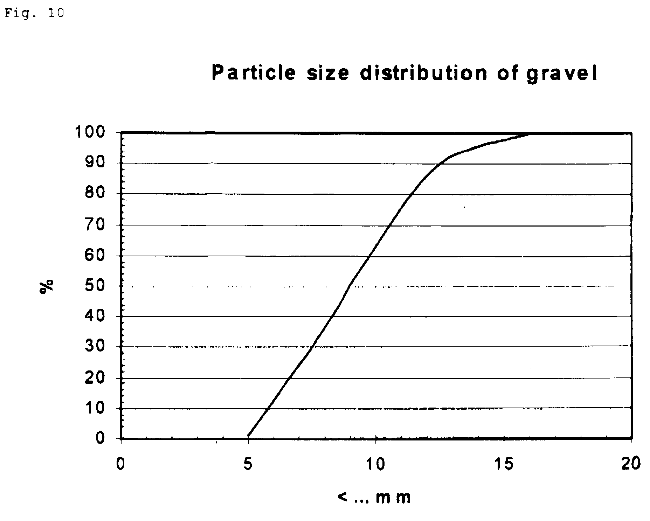

River sand and gravel were used. Their particle size distributions are given in figure 9 and 10.

#### Polysurfactant-like polysaccharides for use in concrete.

As starting material for the etherification (hydroxyalkylation or alkylation) of different polysaccharides can be used. For example starch, cellulose, inuline, guar, dextran, pullulan or locust bean gum can be used. Preferently starch is used as starting material.

Etherification (hydroxyalkylation or alkylation) of a polysaccharide can be performed under (semi) dry conditions, in suspension (water or organic solvent), or in aqueous solution (dispersion). Depending on the source of the polysaccharide and the type of reagent the reaction system is chosen. General methods for the etherification (hydroxyalkylation or alkylation) of cellulose is described in for example: British Polymer Journal 23 (1990) 315-326. Guar an locust bean gum ethers are produced either in organic suspension or via a (semi) dry reaction. The reaction in aqueous solution is preferred when starch is used as starting material. An autoclave is then preferably used as reaction equipment. The resulting reaction mixture can be used as such or be dried.

Hydroxyalkylation or alkylation of polysaccharides is obtained with reagents containing a halogen, halohydrin, epoxide or glycidyl group as reactive site. The alkyl chain of the hydroxyalkylating or alkylating agent can vary from 1-20 carbon atoms, preferably from 1-12 carbon atoms, more preferably from 1-4 carbon atoms, for example methyl chloride, ethyl chloride, ethylene oxide, propylene oxide, butylene oxide, allyl glycidyl ether, propyl glycidyl ether or combinations of those reagents can be used. Preferably propylene oxide is used to produce the hydroxyalkylated polysachharides.

The degree of substitution to produce polysurfactant-like polysaccharides which can dissolve in 95 weight % ethanol depends on the nature and hydrofobicity of the polysaccharide and the hydrophobicity of the reagent. When a more hydrophobic substituent or polysaccharide is used a lower DS can be applied in comparison to a reagent which is less hydrophobic. In order to prepare a hydroxypropylated starch which partially dissolves in 95 weight % ethanol a maximum degree of substitution (DSmax) of 1.5 is required. This means that 1.0 mole of glucose units is treated with 1.5 mole of propylene oxide. As a result the degree of substitution (DS), which is the ratio between the amount of etherified alcohol groups of the glucose unit (in mole) and the glucose unit (in mole) is less then 1.5. This is because the yield of the reaction is less then 100%. Beside, the reaction of starch with propylene oxide leads to a substituent (2-

6

hydroxypropyl) which itself also posses a hydroxyl group. On deprotonation the hydroxyl group of the 2-hydroxypropyl substituent can react with propylene oxide. This last reaction does not give an increase in DS. However, the molar substitution (MS) which is the ratio between the propylene oxide which has reacted with the starch (in mole) and the amount of glucose units (in mole), increases.

In table 1, the DS is displayed. In the case of hydroxypropylated starch a DSmax of 1.0 led to a DS of 0.7; DSmax 1.5 led to a DS of 1.1 and DSmax 2.0 led to a DS of 1.4. Polysurfactant-like polysaccharides based on starch show in a aqueous environment an increase in viscosity when the degree of substitution is increased. Products with a molar degree of substitution of 1.4 mol/mol (DSmax 2.0) or higher are particularly soluble in ethanol / water (95 / 5). Products with a substitution of 1.1 mol/mol (DSmax 1.5) are partly soluble in such a solvent.

Optimal results concerning reducing of segregation in concrete are found with a product having a molar degree of substitution of ~1.2 - 1.6 mol/mol.

Table 1

| Molar degree of substitution hydroxypropyl) mol/mol | Solubility of polysurfactant-like additive: | | | | Effect of hydroxypropyl ethers in concrete |
|---|---|---|---|---|---|
| | Solubility | Viscosity (a) | Solubility | Viscosity (a) | |
| ~0.7 | soluble | 730 mPas | insoluble | | loss of flow |
| ~1.1 | soluble | 870 mPas | partly soluble (swollen) | | moderate effect on segregation |
| ~1.4 | soluble | 2280 mPas | soluble | 515 mPas | significant reduction of segregation |

(a) Brookfield RVF, 20 rpm, 20°C

Test methods

Fluidity of concrete

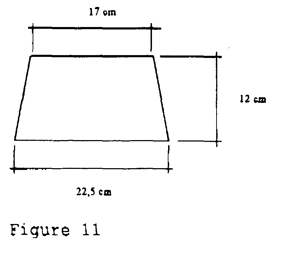

The fluidity of concrete was assessed by the measurement of the static spread of a truncated cone as shown in figure 11. Concrete is considered self-compacting when the diameter is greater than 500 mm and self-levelling when the diameter is greater than 550 mm.

Resistance to segregation

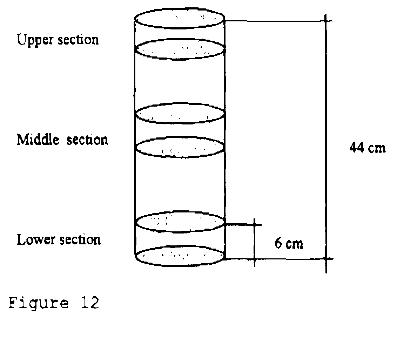

Concrete was poured in a column and left until it started to set, there after samples were taken from the upper, middle and lower sections as shown in figure 12. Coarse aggregates of each sample were washed out through a five millimeter mesh screen and weighed.

Rate of bleeding

Five liters of concrete were poured in a basin of 245 mm long, 245 mm wide and 100 mm high, and left for 90 minutes. The quantity of bleeding water which appeared at the surface of the sample was then measured. The bleeding rate (BR) was calculated using the following equation:

$$BR = (M_W/M_{WC}) \times 100$$

where:

$M_W$ = weight of bleeding water,
$M_{WC}$ = weight of water contained in the concrete.

Compressive strength

The compressive strength was measured using three cylinders of 110 mm in diameter and 220 mm high. The rate of loading was 5 kN/s.

Unrestrained shrinkage

The unrestrained drying shrinkage was measured on prismatic samples (70x70x280 mm). The specimens were demoulded at 24 hours and kept in the testing room at 20°C ± 2°C and 50 % ± 10% RH.

Water permeability

The water permeability of concrete was measured at 90 days on discs having a diameter of 110 mm and 50 mm height, according to the Dancy's relationship.

Examples

A possible formulation for preparing a self-levelling concrete.

| 280 | kg | Portlandcement Cem I 42.$^5$R |
|---|---|---|
| 120 | kg | Fly ash |
| 1100 | kg | Sand 0/4 mm |
| 700 | kg | Gravel (4/16 mm) |
| 170 | kg | Water |
| 4 - 8 | kg | Superplasticizer (Melamin based) |
| 0,18 - 0,26 | kg | Polysurfactant-like additive as provided by the invention |

The cement content in this example can be increased at least up till 300 kg/m$^3$. Then the amount of Fly ash is reduced till 100 kg/m$^3$ to maintain the total amount of fines (Cement + Fly ash) on 400 kg/m$^3$. The type of Portland cement (cem I 42$^5$R) is exchangeable by another type of cement.

Fly ash can be replaced by Limestone powder

It is preferred to use sand with a fine particle content (<250 $\mu$m ) of 15±3 %.

The total amount of fine and coarse aggregates is 1800 kg/m$^3$. Within this quantity the sand content can vary between 1100 and 900 kg/m$^3$ for example by exchanging a part with the gravel.

It is preferred to use a superplastificiser of a melamine type, a napthalene type, an acrylic polymer, a vinilic polymer or a lignosulphate.

Concrete compositions also tested

The weight fractions of cement, powdered limestone, fly ash and superplasticizer were kept constant as shown in table 2. The total amount of fine particles (cement + fly ash or limestone) was limited at 400 kg/m$^3$. Two sand to gravel ratios were chosen: 1 and 1.57.

Therefore, two amounts of polysurfactant-like additive were introduced: 0.260 and 0.180 kg/m$^3$ (expressed as dry matter). The quantity of mixing water was adapted to obtain the same flow.

Table 2

| Mixture proportions of concrete (kg/ m$^3$) | | | | | | | | |
|---|---|---|---|---|---|---|---|---|
| Concrete reference | Cement | Powdered limestone | Fly ash | gravel | sand | Mixing water | Superplasticizer | additive (*) |
| 1 | 280 | -- | 120 | 900 | 900 | 170 | 4.5 | 0.260 |
| 2 | 280 | -- | 120 | 700 | 1100 | 180 | 4.5 | 0.180 |
| 3 | 280 | 120 | | 900 | 900 | 170 | 4.5 | 0.260 |
| 4 | 280 | 120 | | 700 | 1100 | 195 | 4.5 | 0.180 |

(*) Polysurfactant-like additive as provided by the invention.

Properties of fresh concrete

Flow and bleeding

The flow and rate of bleeding of different mixtures are shown in table 3. No bleeding was measured after 3 hours.

Table 3

| Properties of fresh concrete. | | | |
|---|---|---|---|
| Concrete reference | Flow mm | Specific gravity | Rate of bleeding % |
| 1 | 630 | 2.36 | 0 |
| 2 | 600 | 2.34 | 0 |
| 3 | 620 | 2.34 | 0 |
| 4 | 570 | 2.23 | 0 |

Segregation

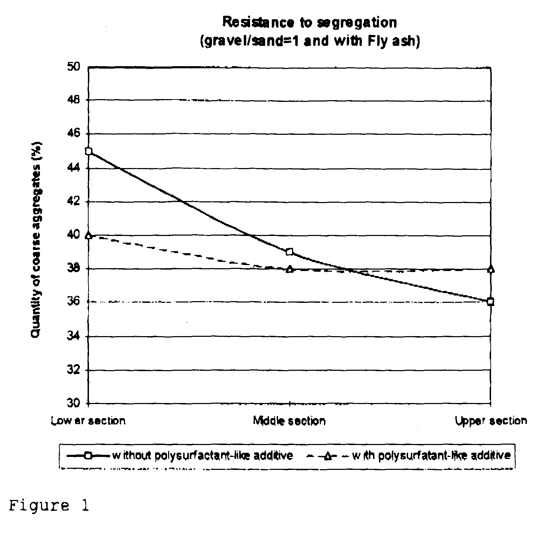

The resistance to segregation is presented in Fig. 1, 2, 3 and 4. Segregation of self-levelling concrete means separation into mortar and coarse aggregates caused by settlement of coarse aggregates. In order to evaluate resistance to segregation, concrete was placed in a column and left until it started to set, after which samples were taken from the upper, middle and lower sections. Coarse aggregates of each sample were washed out through a five millimeter mesh screen and weighed. There is little or no segregation and uniform distribution of coarse aggregates when the percentage of coarse aggregates retained on the screen, in each section, is found close to the values given in table 4.

Table 4

| Theoretical values of the coarse aggregates fraction. | | | | |
|---|---|---|---|---|
| Concrete reference | Gravel (kg/m$^3$) | Quantity of gravel in the sand (kg/m$^3$) | Total quantity of gravel (kg/m$^3$) | % of coarse aggregates |
| 1 | 900 | 45 | 945 | 40 |
| 2 | 700 | 55 | 755 | 32 |
| 3 | 900 | 45 | 945 | 40 |
| 4 | 700 | 55 | 755 | 33 |

In table 5 and figure 1 the difference is shown in segregation between the formulation called concrete reference No. 1 and the same formulation but without the addition of polysurfactant-like additive. The difference in the quantity of coarse aggregates between the lower section and the upper section is a measure for the rate of segregation. As is clear from the table and figure, concrete without a polysurfactant-like additive as provided by the invention shows considerable segregation, whereas concrete with polysurfactant additive shows little or no segregation, the differences between lower and upper sections are 9% points and 2% points, respectively.

Table 5

| Quantity of coarse aggregates in different sections | | |
|---|---|---|
| Polysurfactant-like additive | without | with |
| Lower section % | 45 | 40 |
| Middle section % | 39 | 38 |
| Upper section % | 36 | 38 |
| Lower section - upper section % | 9 | 2 |

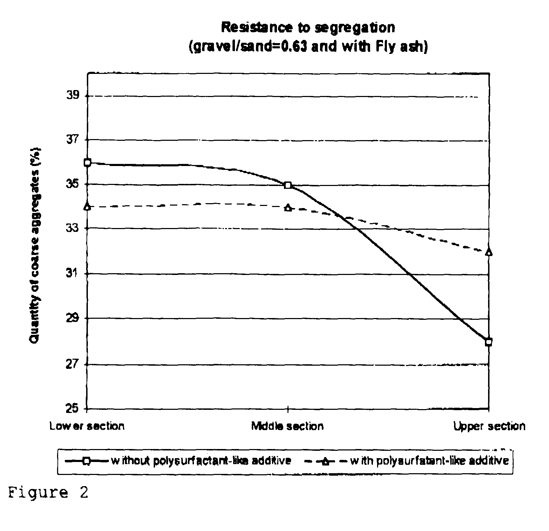

In table 6 and figure 2 the difference in segregation is shown between the formulation called concrete reference No. 2 and the same formulation but without the addition of polysurfactant-like additive. The difference in the quantity of coarse aggregates between the lower section and the upper section is a measure for the rate of segregation. As is clear from the table and figure, concrete without a polysurfactant-like additive as provided by the invention shows considerable segregation, whereas concrete with polysurfactant additive shows little or no segregation, the differences between lower and upper sections are 8% points and 2% points, respectively.

Table 6

| Quantity of coarse aggregates in the different sections | | |
|---|---|---|
| Polysurfactant-like additive | without | with |
| Lower section % | 36 | 34 |
| Middle section % | 35 | 34 |
| Upper section % | 28 | 32 |
| Lower section - upper section % | 8 | 2 |

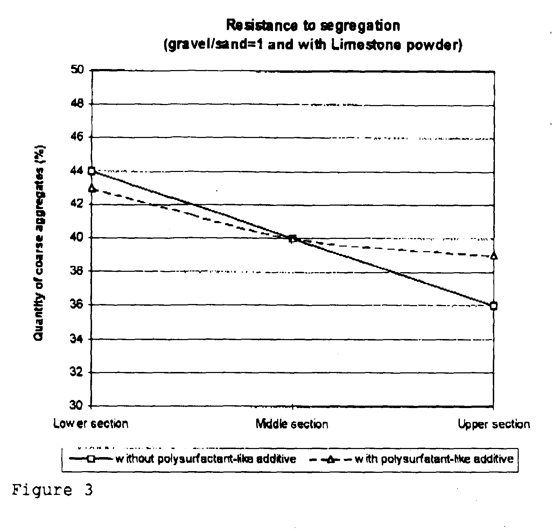

In table 7 and figure 3 the difference is shown in segregation between the formulation called concrete reference No. 3 and the same formulation but without the addition of polysurfactant-like additive. The difference in the quantity of coarse aggregates between the lower section and the upper section is a measure for the rate of segregation. As is clear from the table and figure, concrete without a polysurfactant-like additive as provided by the invention shows considerable segregation, whereas concrete with polysurfactant additive shows little or no segregation, the differences between lower and upper sections are 8% points and 4% points, respectively.

Table 7

| Quantity of coarse aggregates in the different sections | | |
|---|---|---|
| Polysurfactant-like additive | without | with |
| Lower section % | 44 | 43 |
| Middle section % | 40 | 40 |
| Upper section % | 36 | 39 |
| Lower section - upper section % | 8 | 4 |

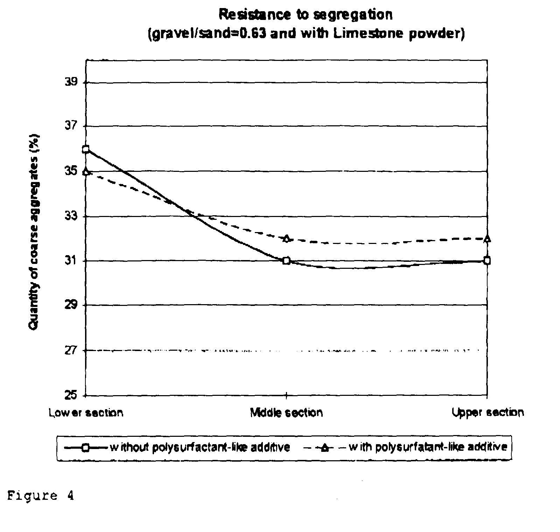

In table 8 and figure 4 the difference in segregation is shown between the formulation called concrete reference No. 4 and the same formulation but without the addition of polysurfactant-like additive. The difference in the quantity of coarse aggregates between the lower section and the upper section is a measure for the rate of segregation. As is clear from the table and figure, concrete without a polysurfactant-like additive as provided by the invention shows considerable segregation, whereas concrete with polysurfactant additive shows little or no segregation, the differences between lower and upper sections are 5% points and 3% points, respectively.

Table 8

| Quantity of coarse aggregates in the different sections | | |
|---|---|---|
| Polysurfactant-like additive | without | with |
| Lower section % | 36 | 35 |
| Middle section % | 31 | 32 |
| Upper section % | 31 | 32 |
| Lower section - upper section % | 5 | 3 |

Properties of hardened concrete

Compressive strength

The compressive strengths at different times of hydration are shown in table 9. The higher level of strength obtained with mixtures 1 and 2 at 28 days may be explained by the pozzolanic activity of fly ash. The lower strength of mixture 4 is due to a higher amount of mixing water.

Table 9

| Compressive strength of self levelling concrete (Mpa) | | | | | |
|---|---|---|---|---|---|
| Concrete reference | 18 h | 2 days | 7 days | 28 days | 90 days |
| 1 | 8.7±0.4 | 21.9±1.5 | 40.6±1.7 | 49.9±0.6 | 62.0±2.5 |
| 2 | 8.1±0.2 | 21.3±0.8 | 40.4±0.2 | 47.6±0.7 | 57.9±2.4 |
| 3 | 12.6±0.5 | 23.1±1.1 | 41.3±0.5 | 45.7±0.6 | 50.5±2.5 |
| 4 | 9.8±0.8 | 20.3±0.6 | 34.4±1.2 | 40.4±0.5 | 42.2±1.2 |

Unrestrained drying shrinkage

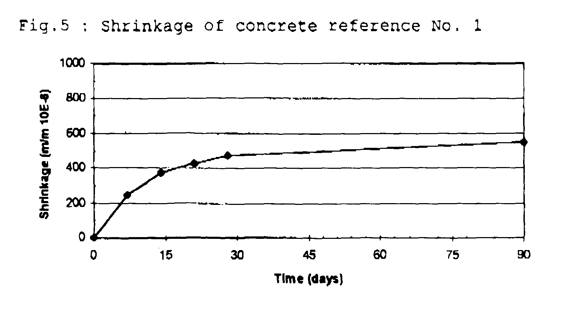

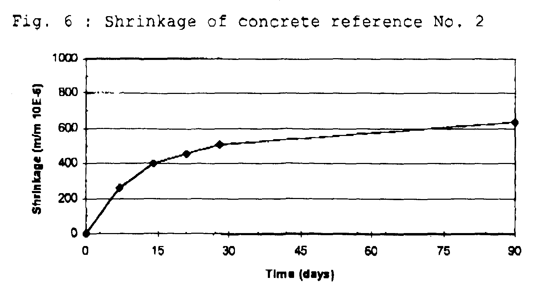

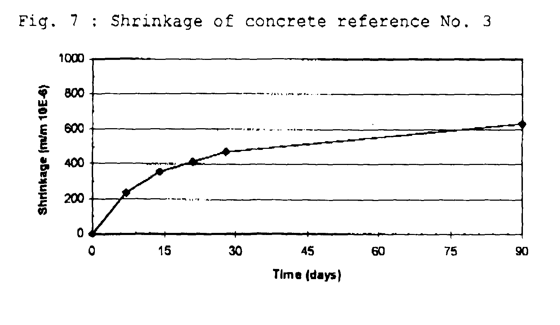

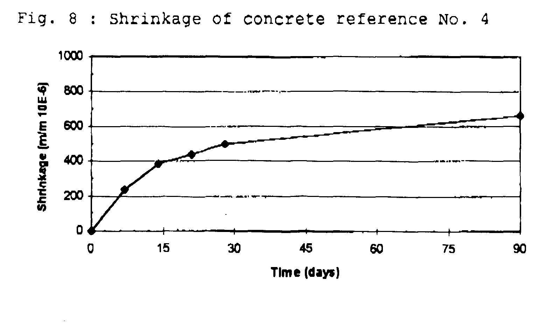

The unrestrained drying shrinkage of the four mixtures is shown in table 10 and fig. 5, 6, 7 and 8, until 90 days of hydration. It was measured on prismatic samples (70x70x280 mm) according to the French standard NFP 15 . 433.

Table 10

| Unrestrained drying shrinkage at 90 days (T=20°C and RH=50%). | |
|---|---|
| Concrete reference | $\Delta\ell/\ell$ (µm/m) |
| 1 | 550 |
| 2 | 640 |
| 3 | 630 |
| 4 | 660 |

Water permeability

The water permeability of four concretes is reported in table 11.

Table 11

| Water permeability | | | |
|---|---|---|---|
| Concrete reference | Water permeability ($10^{-12}$ m/s) | | |
| | Average | Minimum | Maximum |
| 1 | 0.46 | 0.21 | 0.92 |
| 2 | 0.95 | 0.80 | 1.13 |
| 3 | 2.03 | 0.85 | 3.30 |
| 4 | 1.90 | 0.80 | 4.01 |

The water permeability of the concrete is limited to $2 \times 10^{-12}$ m/s and allows to expect good durability.

**Claims**

1.  A method for placing concrete using a concrete comprising a polysurfactant-like additive.

2.  A method according to claim 1 wherein said additive is a polysaccharide.

3.  A method according to claim 1 or 2 wherein said additive is at least partly soluble in 95 % ethanol.

4.  A method according to claim 1 to 3 wherein said additive is an etherified polysacharide having a maximum degree of substitution (DSmax) of at least 1.5.

5.  A method according to claim 4 wherein said Dsmax is at least 1.75, preferably at least 2.

6.  A method according to any one of claims 1 to 5 wherein said polysurfactant-like additive is a hydroxypropylated starch.

7.  A method according to claim 6, wherein said additive is derived from potato starch.

8.  A method for preparing a concrete comprising mixing cement, water and solids and at least one additive characterised in that said additive comprises a polysurfactant-like additive.

9.  A method according to claim 8 wherein said polysurfactant-like additive is derived of a polysaccharide.

10. A method according to claim 8 or 9 wherein said polysurfactant-like additive is at least partly soluble in 95 % ethanol.

11. A method according to claim 8 to 10 wherein said polysurfactant-like additive is an etherified polysacharide.

12. A method according to claim 11 wherein said etherified polysaccharide is a starch having a maximum degree of substitution (DSmax) of at least 1.5.

13. A method according to claim 12 wherein said Dsmax is at least 1.75, preferably at least 2.

14. A method according to any one of claim 11 to 13 wherein said polysurfactant-like additive is a hydroxypropylated starch.

15. A method according to claim 11 to 14, wherein said polysurfactant-like additive is derived from potato starch.

16. Concrete for use in a method according to anyone of claims 1 to 15.

17. A polysurfactant-like additive comprising a polysaccharide which has been etherified up to a degree of substitution allowing at least partly dissolving said additive in 95 weight % ethanol.

18. A polysurfactant-like additive according to claim 17 for use in a method according to anyone of claims 1 to 15.

19. A prefabricated concrete element obtained by using method according to anyone of claims 1 to 15.

20. A concrete structure obtained by using a method according to anyone of claims 1 to 15.

21. A method for making a building structure or a concrete element by pouring a prepared concrete in a predetermined space characterised that said concrete includes a polysurfactant-like additive.

22. A method to produce a polysurfactant-like additive comprising etherification of a polysaccharide up to a degree of substitution allowing dissolving said additive in 95 weight % ethanol.

23. A method according to claim 22 wherein said etherification comprises hydroxypropylating.

24. A method according to claim 22 or 23 wherein said polysaccharide is starch, preferably potato starch.

25. A method according to any of claims 22 to 23 wherein said degree of substitution (DSmax) is at least 1.5, preferably at least 1.75, more preferably at least 2.

**Resistance to segregation
(gravel/sand=1 and with Fly ash)**

Figure 1

**Resistance to segregation
(gravel/sand=0.63 and with Fly ash)**

Figure 2

**Resistance to segregation
(gravel/sand=1 and with Limestone powder)**

Figure 3

**Resistance to segregation**
**(gravel/sand=0.63 and with Limestone powder)**

Figure 4

Fig.5 : Shrinkage of concrete reference No. 1

Fig. 6 : Shrinkage of concrete reference No. 2

Fig. 7 : Shrinkage of concrete reference No. 3

Fig. 8 : Shrinkage of concrete reference No. 4

Fig. 9

Particle size distribution of sand

Fig. 10

**Particle size distribution of gravel**

Figure 11

Upper section

Middle section

44 cm

Lower section

6 cm

Figure 12

**European Patent Office**

# EUROPEAN SEARCH REPORT

Application Number

EP 98 20 1379

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 530 768 A (HOECHST AG) 10 March 1993<br><br>* page 2 - page 4; tables I,VII * | 1-6,<br>8-11,13,<br>17-23,25 | C04B24/38 |
| X | DE 39 13 518 A (AQUALON GMBH)<br>31 October 1990<br>* column 2 - column 3; example 1 * | 1-5,8,<br>17-23,25 | |
| X | US 4 487 864 A (BERMUDEZ MAURICIO ET AL)<br>11 December 1984<br><br>* column 2 - column 3; claim 12; table I * | 1-5,<br>8-13,<br>17-23 | |
| X | US 3 847 630 A (COMPERNASS J ET AL)<br>12 November 1974<br>* claim 1; example 1 * | 1,8,16,<br>18-21 | |
| X | DATABASE WPI<br>Section Ch, Week 8621<br>Derwent Publications Ltd., London, GB;<br>Class A93, AN 86-135094<br>XP002083016<br>& JP 61 072663 A (SHINETSU CHEM IND CO<br>LTD), 14 April 1986<br>* abstract * | 1-21 | TECHNICAL FIELDS SEARCHED (Int.Cl.6)<br><br>C04B |
| X | EP 0 409 781 A (WARNER LAMBERT CO)<br>23 January 1991<br>* page 4, line 48 - line 57 *<br>* page 6 - page 7; examples 7,8 * | 17,18,22 | |
| X | DE 44 40 236 A (WACKER CHEMIE GMBH)<br>15 May 1996<br>* page 11; claims 1,5; example 13 * | 1,8,<br>16-20 | |

The present search report has been drawn up for all claims

| Place of search | Date of completion of the search | Examiner |
|---|---|---|
| MUNICH | 3 November 1998 | Rauscher, M |

EPO FORM 1503 03.82 (P04C01)

**ANNEX TO THE EUROPEAN SEARCH REPORT
ON EUROPEAN PATENT APPLICATION NO.**                EP 98 20 1379

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-1998

| Patent document cited in search report | | Publication date | Patent family member(s) | | Publication date |
|---|---|---|---|---|---|
| EP 0530768 | A | 10-03-1993 | AT | 133928 T | 15-02-1996 |
| | | | DE | 59205287 D | 21-03-1996 |
| | | | ES | 2083041 T | 01-04-1996 |
| | | | JP | 5201756 A | 10-08-1993 |
| | | | MX | 9205038 A | 30-07-1993 |
| | | | US | 5387626 A | 07-02-1995 |
| DE 3913518 | A | 31-10-1990 | NONE | | |
| US 4487864 | A | 11-12-1984 | AU | 2613184 A | 01-11-1984 |
| | | | BR | 8402014 A | 04-12-1984 |
| | | | DE | 3469748 A | 14-04-1988 |
| | | | EP | 0131090 A | 16-01-1985 |
| US 3847630 | A | 12-11-1974 | NONE | | |
| EP 0409781 | A | 23-01-1991 | AT | 106432 T | 15-06-1994 |
| | | | AU | 631091 B | 12-11-1992 |
| | | | AU | 5906490 A | 24-01-1991 |
| | | | CA | 2020895 A | 19-01-1991 |
| | | | CN | 1048860 A | 30-01-1991 |
| | | | DE | 69009327 D | 07-07-1994 |
| | | | DE | 69009327 T | 13-10-1994 |
| | | | DK | 409781 T | 19-09-1994 |
| | | | ES | 2055400 T | 16-08-1994 |
| | | | HU | 211427 B | 28-11-1995 |
| | | | IE | 64058 B | 12-07-1995 |
| | | | IL | 95041 A | 28-11-1994 |
| | | | JP | 1988864 C | 08-11-1995 |
| | | | JP | 3074446 A | 29-03-1991 |
| | | | JP | 7025941 B | 22-03-1995 |
| | | | PT | 94657 A,B | 20-03-1991 |
| DE 4440236 | A | 15-05-1996 | AT | 167889 T | 15-07-1998 |
| | | | DE | 59502705 D | 06-08-1998 |
| | | | WO | 9615187 A | 23-05-1996 |
| | | | EP | 0791033 A | 27-08-1997 |
| | | | ES | 2119496 T | 01-10-1998 |
| | | | FI | 971983 A | 10-06-1997 |
| | | | JP | 9511782 T | 25-11-1997 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 98 20 1379

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-1998

| Patent document cited in search report | Publication date | Patent family member(s) | Publication date |
|---|---|---|---|
| DE 4440236 A | | NO 972148 A | 09-05-1997 |
| | | US 5777003 A | 07-07-1998 |

EPO FORM P0459

For more details about this annex : see Official Journal of the European Patent Office, No. 12/82